# FASCICULE DE BREVET EUROPEEN

(11) **EP 0 455 520 B1**
(45) Date de publication et mention de la délivrance du brevet: **18.05.1994**
(21) Numéro de dépôt: 91400720.8
(22) Date de dépôt: 18.03.1991
(51) Int. Cl.: B60S 1/40

(54) **Connecteur apte à solidariser un balai d'essuie-glace à un bras d'essuie glace**
Verbindungsstück zum Verbinden eines Scheibenwischerblattes mit einem Scheibenwischerarm
Connector suitable for joining a windscreen wiper blade to a windscreen wiper arm

(30) Priorité: 19.03.1990 FR 9003474
(43) Date de publication de la demande: 06.11.1991
(73) Titulaire: VALEO SYSTEMES D'ESSUYAGE, 78180 Montigny-Le-Bretonneux (FR)
(72) Inventeur: Schon, Wilfrid, F-63580 St. Etienne/Usson (FR); Andre, Pascal, F-63100 Clermont-Ferrand (FR)
(74) Mandataire: Gamonal, Didier

(56) Documents cités:
- EP-A- 0 002 843
- EP-A- 0 290 324
- DE-A- 3 619 589
- DE-A- 3 914 629
- DE-U- 8 607 351
- FR-A- 2 403 247
- FR-A- 2 468 490

## Description

L'invention se rapporte à un connecteur destiné à solidariser un balai d'essuie-glace avec un bras d'essuie-glace, notamment pour véhicule automobile.

Les connecteurs de l'Art antérieur comportent habituellement des moyens de réception d'un axe porté par le balai d'essuie-glace et des moyens d'accrochage audit bras d'essuie-glace.

Dans le cas particulier où le bras comporte une extrémité recourbée, il est prévu que le balai d'essuie-glace présente une ouverture pour le passage de l'extrémité de ce bras, ouverture à travers laquelle s'étend l'axe transversal permettant une liaison articulée du bras et du balai et que le connecteur présente un profil longitudinal sensiblement en forme de U à deux branches, propre à se loger dans la concavité de l'extrémité recourbée du bras, ledit connecteur comportant des moyens d'accrochage sur le bras et des moyens de réception de l'axe s'ouvrant du côté opposé au fond du U et agencée pour permettre d'introduire l'axe dans ces moyens de réception et le retenir.

Les moyens d'accrochage sont portés par l'une des branches du connecteur en U et consistent par exemple en un cran saillant coopérant avec un logement prévu sur l'extrémité recourbée du bras en regard dudit cran.

Pour une éventuelle intervention sur le balai, telle que son remplacement, il est prévu, comme décrit dans la demande de brevet français FR-A-2 403 247, des moyens de préhension permettant de désolidariser le bras et le balai, ces moyens de préhension étant disposés à l'extrémité de la branche du connecteur en U portant les moyens d'accrochage en faisant saillie de manière que, par une action manuelle, il soit possible de faire quitter le cran du logement prévu sur l'extrémité recourbée du bras par déformation de cette branche en direction de l'autre branche.

Cette disposition présente l'inconvénient de nécessiter une section transversale de la branche portant les moyens d'accrochage et les moyens de préhension permettant d'obtenir une élasticité de cette branche qui soit un compromis autorisant une élasticité suffisante pour la mise en place, le maintien et la sortie du cran de l'intérieur du logement du bras tout en ayant une élasticité telle qu'un grand effort manuel sur les moyens de préhension ne soit pas nécessaire pour déverrouiller le bras et le balai sans pour cela que ceux-ci puissent être actionnés malencontreusement.

Cette solution de compromis donnant en final une manipulation peu aisée des moyens de préhension, l'élasticité pour les moyens d'accrochage étant privilégiée.

La présente invention permet de pallier l'inconvénient mentionné ci-dessus en proposant un connecteur de conception très simple et de manipulation très aisée.

Selon l'invention, le connecteur apte à solidariser un balai d'essuie-glace à un bras d'essuie-glace, notamment pour véhicule automobile, présentant un profil en section de forme générale en U à deux branches dont l'une au moins est élastiquement déformable, l'une au moins des branches comportant des moyens d'accrochage sur le bras et des moyens de préhension pour le déverrouillage du connecteur par rapport au bras (Connecteur du type divulgué, par exemple, dans FR-A-2 403 247), est caractérisé en ce que au moins l'une des branches se compose au moins de deux parties élastiquement déformables et séparées l'une de l'autre, l'une des parties portant les moyens d'accrochage et l'autre des parties portant les moyens de préhension et ainsi qu'une traverse, de telle sorte qu'au cours du déverrouillage, la traverse entraîne dans son mouvement les moyens d'accrochage en désolidarisant ces derniers du bras d'essuie-glace indépendamment de l'élasticité de la partie nécessaire à l'accrochage du connecteur audit bras.

Grâce à l'invention, la partie portant les moyens d'accrochage peut être de section réduite de façon à augmenter son élasticité ou à la diminuer alors que les efforts de l'action manuelle nécessaire pour le déverrouillage s'appliquent directement sur l'autre partie de la branche et peuvent être d'intensité voulue.

Différents modes de réalisation de l'invention selon la revendication 1 sont précisés dans les revendications dépendantes 2 à 10.

Les caractéristiques et avantages de l'invention ressortiront de la description qui va suivre en se référant aux dessins annexés sur lesquels :
- la figure 1 est une vue en coupe longitudinale du connecteur selon l'invention d'après la ligne AA de la figure 2 ;
- la figure 2 est une vue de dessus de la figure 1 ;
- la figure 3 est une vue de droite de la figure 1 ;
- la figure 4 est une vue en coupe longitudinale montrant le connecteur selon la présente invention apte à solidariser un bras d'essuie-glace avec un balai d'essuie-glace ;
- la figure 5 est une vue en coupe longitudinale montrant l'ensemble assemblé à partir de la figure 4 ;
- la figure 6 montre une vue en coupe longitudinale de l'utilisation du connecteur selon l'invention pour une autre variante de montage.

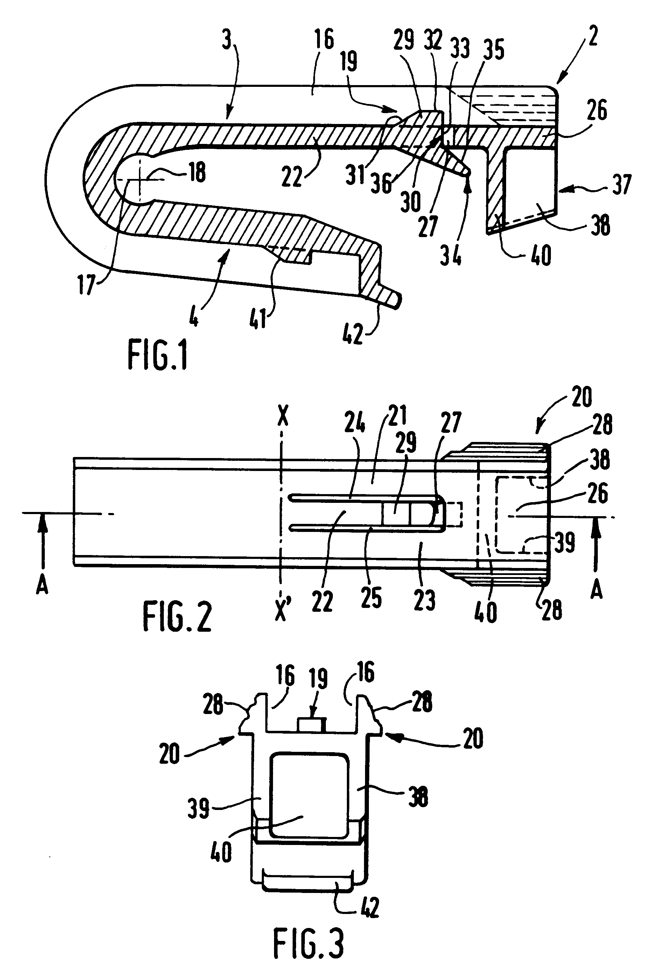

En se référant aux figures 1 à 4, il est montré un connecteur 2 présentant un profil longitudinal sensiblement en forme de U à deux branches 3 et 4.

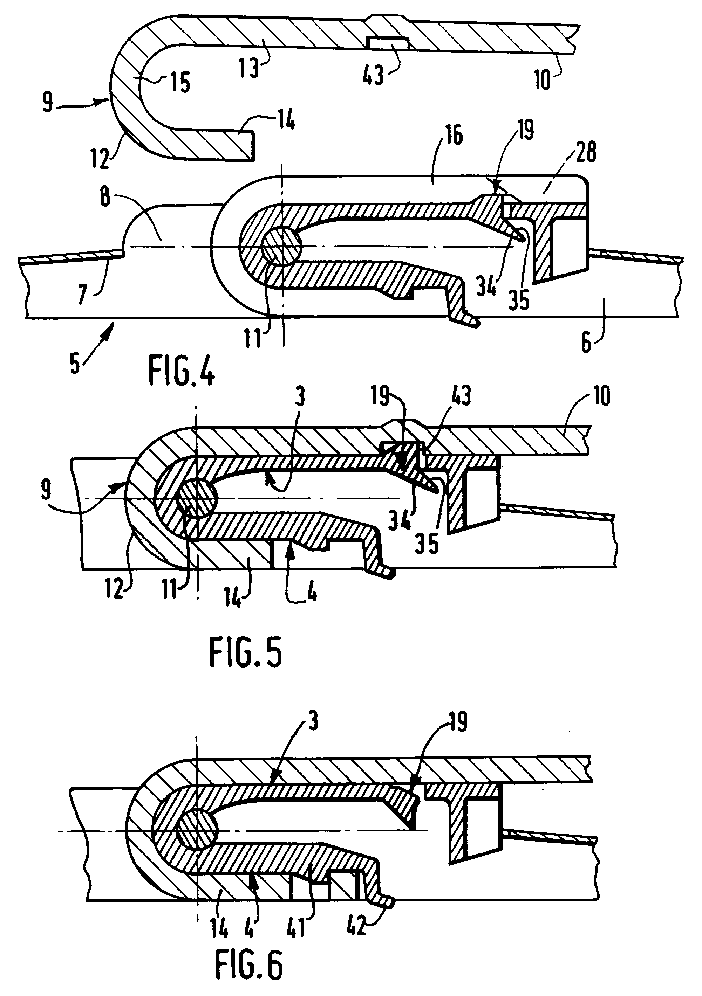

Ce connecteur est apte à être porté par un balai d'essuie-glace 5 (figure 4) dont la monture principale 6, constituée d'un profil à section transversale en U inversé, est apte à porter, directement ou par l'intermédiaire de palonniers (non représentés), une lame d'essuie-glace en matière souple (également non représentée) destinée à frotter sur la surface à essuyer.

Plus précisément, la monture principale 6 porte, au niveau de sa paroi de fond 7, une ouverture 8 destinée à recevoir le connecteur 2 et l'extrémité 9 d'un bras d'essuie-glace 10 et à travers de laquelle s'étend un axe transversal 11 apte à assurer la liaison articulée du bras et du balai d'essuie-glace.

L'extrémité 9 du bras 11 est ici conformée de manière à présenter une partie recourbée 12 en forme de crochet et le connecteur 2 est propre à se loger dans la concavité de cette partie recourbée de manière à ce que les branches 3 et 4 dudit connecteur s'appuient respectivement sur les parties 13, 14 de cette partie recourbée, la partie 13 étant dans le prolongement de l'âme principale du bras d'essuie-glace et la partie 14 étant disposée sensiblement parallèlement à la partie 13 en étant reliée à celle-ci par une partie courbe de forme complémentaire à la partie courbe reliant les branches 3 et 4 du connecteur 2.

En se reportant maintenant aux figures 1 à 4, le connecteur 2 comporte de chaque côté, une bordure 16 constituant un flasque sensiblement orthogonal au plan des branches 3, 4, les flasques ainsi formés étant destinés à encadrer l'extrémité 9 du bras d'essuie-glace 10.

Le connecteur 2 présente en outre un moyen de réception de l'axe 11 du balai d'essuie-glace 5, consistant en un logement 17, de section transversale circulaire, situé au voisinage de la partie courbe du connecteur en forme de U et présentant une ouverture 18 dirigée vers l'ouverture du U.

De préférence, le diamètre du logement 17 est égal à celui de l'axe 11 mais la dimension de l'ouverture 18 est inférieure audit diamètre.

Ainsi l'introduction de l'axe 11 dans le logement 17 est obtenu par déformation élastique du connecteur 2, qui en se refermant, assure un clipage de l'axe 11 dans le logement 17.

Ce connecteur 2 comporte, sur la même branche, de préférence la branche supérieur 3, des moyens d'accrochage 19 sur le bras et des moyens de préhension 20 utiles pour assurer le déverrouillage du connecteur par rapport au bras d'essuie-glace 10.

En pratique, la branche 3 est conformée approximativement à partir de sa partie milieu XX' en trois languettes élastiques 21, 22, 23 s'étendant dans la direction longitudinale de cette branche en étant parallèles les unes aux autres et séparées les unes des autres par des évidements 24, 25, s'étendant également dans la direction de cette branche et également parallèles l'un à l'autre, les languettes 21 et 23 étant situées de part et d'autre de la languette 22 en étant reliées l'une à l'autre par une traverse 26 orthogonale auxdites languettes tout en étant située à l'extrémité libre de la branche ainsi conformée, cette traverse étant disposée de telle manière qu'il subsiste un évidement 27 orthogonal aux évidements 24 et 25 en créant ainsi un évidement global de la forme générale de U dont le fond du U est dirigé vers l'extrémité libre de la branche 3.

Ce sont les languettes 21 et 23 qui portent les moyens de préhension 20 consistant ici avantageusement en un bossage 28, faisant saillie transversalement par rapport à la branche 3, et qui, plus précisément, sont portés par la paroi extérieure des flasques 16 que présentent également les languettes 21, 23, et, de manière avantageuse, ces bossages 28 sont situés au niveau de la traverse 26 de manière à procurer une grande flexibilité desdites languettes lors de l'opération de déverrouillage qui sera explicitée plus loin.

Les moyens d'accrochage sont portés par la languette 22 et sont formés par au moins un cran 29, saillant à partir de cette languette, ici en direction opposée à celle de l'ouverture du U que présente le connecteur 2 et de largeur sensiblement égale à celle de cette languette.

Le cran 29 est situé au voisinage de l'extrémité libre 30 de la languette 22 et présente une surface à pente douce 31 du côté opposé à l'extrémité 29 qui se poursuit par une surface 32 disposée à distance de la surface extérieure de la languette 22 en étant sensiblement parallèle à celle-ci, ladite surface 32 se poursuivant par une surface abrupte 33 sensiblement orthogonale à la direction longitudinale de la languette 22.

L'extrémité libre 30 de la languette 22 se poursuit par un moyen d'actionnement de ladite languette, dénommé dans la suite de la description gâchette, et qui est formé par un prolongement en saillie 34 à partir de l'extrémité libre de la languette 22 et qui est dirigé à la fois vers l'ouverture du U que présente le connecteur 1 et vers la traverse 26 de manière à se trouver, en partie, en dessous de cette traverse.

Comme mieux visible à la figure 1, la gâchette 34 présente une première surface inclinée 35 s'étendant sur toute la largeur de la languette 22 et issue du bord inférieur de la surface abrupte 33 de manière à ce que cette surface inclinée se trouve en dessous et en regard de la traverse 26 précédemment définie et une deuxième surface inclinée 36 rejoignant l'extrémité libre de la surface inclinée 35 à la surface interne de la languette 22 en regard de l'ouverture du U que présente le connecteur.

Préférentiellement, la traverse 26 présente à partir de sa surface interne dirigée vers l'ouverture du U du connecteur 2 un moyen de raidissement 37 présentant un profil en U à deux parois parallèles 38, 39 se rejoignant par une paroi de fond 40, les parois 38,39, 40 s'érigeant orthogonalement à partir de la surface interne de la branche 3 et les parois 38, 39 s'étendent dans la même direction et dans le même plan que les flasques 16 mais à partir de la surface opposée à celle qui porte lesdits flasques et tout en ayant leurs extrémités libres en direction de l'extrémité libre de la branche 3 et la paroi de fond 40 s'érige orthogonalement à partir de la surface interne de la traverse 26 en étant située à distance de l'extrémité libre de la branche.

Bien entendu et cela sans sortir du cadre de l'invention les moyens d'accrochage 19 et les moyens de préhension 20 tels que définis peuvent être portés par la branche 4 ou à la fois par les branches 3 et 4 et de même, comme visible sur les figures, il peut être prévu que les moyens d'accrochage et de préhension connus de l'Art antérieur peuvent être portés par la branche 4, tels qu'un second cran 41 et un appendice de déverrouillage 42 saillant à partir de la branche 4 et qui ne seront pas ici décrits plus précisément.

Le connecteur 2 apte à solidariser le bras d'essuie-glace 10 avec un balai d'essuie-glace 5 sera maintenant explicité en regard des figures 4 et 5.

Dans une première étape, le connecteur 2 est monté sur le balai 5 comme précédemment défini et plus particulièrement en engageant l'axe 11 entre les faces internes des branches 3 et 4 et en exerçant une poussée suffisante pour provoquer la déformation élastique desdites branches de manière à ce que l'axe 11 se retrouve dans le logement 17 prévu dans le dispositif connecteur.

Lorsque l'axe 11 est mis en place, le connecteur 2 reprend sa forme initiale et l'axe 11 est retenu dans le logement.

Le montage de l'ensemble formé par le connecteur 2 et le balai 5 s'effectue en faisant passer cet ensemble sous le bras 10 de manière à ce que le connecteur 2 se retrouve en arrière de l'extrémité recourbée 12.

L'extrémité recourbée 12 est ensuite introduite dans l'ouverture 8 que présente le balai 5 et une poussée est exercée sur le balai de façon à engager le connecteur 2, par translation, dans la concavité de cette extrémité de manière à ce que le cran 29 de la languette 22 s'escamote dans un premier temps en direction de l'ouverture du U du connecteur 2 par flexion de la languette 21, les languettes 22, 23, n'étant soumises qu'à une flexion minime nécessaire pour s'appuyer sur la face interne de la branche 3 de l'extrémité 9, et jusqu'à ce que ce cran vienne coopérer avec un logement 43 prévu sur la surface intérieure du bras 10, ce logement pouvant être constitué par une lumière ou par un embouti, la languette 22 reprenant approximativement son état initial.

Les positions longitudinales du cran 29 et du logement 43 sont prévues de manière à ce que ces deux parties puissent coopérer lorsque le fond convexe du connecteur 2 coopère avec le fond concave de l'extrémité recourbée 12.

Dans la position montée représentée en figure 5, le bras 10 est immobilisé en translation par rapport au connecteur par contact de la surface abrupte 33 et l'une des parois du logement 43 et par coopération des parties concave et convexe respectivement de l'extrémité 12 et du connecteur 2.

Le démontage du bras par rapport au connecteur 2 s'effectue aisément par une action manuelle sur les bossages 28 qui entraîne une flexion des languettes 21, 23 en direction de l'ouverture du U jusqu'à ce que le bord transversal de la traverse 26 en regard de la surface inclinée 35 de la gâchette 34 vienne en contact avec celle-ci et, en continuant cette action manuelle, entraîne dans le même mouvement, grâce à cette gâchette, la languette élastique 22 dans la même direction jusqu'à ce que le cran 29 soit dégagé du logement 43 du bras 10.

Il suffit ensuite d'exercer une traction sur le balai de gauche à droite en considérant la figure 5 pour désolidariser le bras et le balai portant le connecteur.

Ce démontage est d'autant plus facile que les bossages 28 se trouvent de part et d'autre du bras 10 en étant situés à l'opposé de la surface à essuyer et hors de tout obstacle ce qui peut permettre de désolidariser le balai et le bras sans avoir à soulever d'un grand débattement ledit bras.

De plus, il n'est pas nécessaire d'exercer un grand effort sur les bossages 28 pour le déverrouillage grâce aux fait que les languettes élastiques portant les moyens de préhension sont d'une grande élasticité de part leur section réduite mais d'une grande résistance de par le doublement de cette section et, en outre, dans le cas où un grand effort serait exercé, la languette 22 ne serait pas endommagé puisque les languettes 21, 23 subiraient la plus grande part de l'effort exercé.

Avantageusement, il peut être prévu que les sections transversales des languettes 21, 23 d'une part et de la languette 22 d'autre part soient telles que l'on obtienne une élasticité suffisante des languettes 21, 23 pour ne pas nécessiter un grand effort de manoeuvre tout en ayant une élasticité de la languette 22 qui réponde aux manipulations de mise en place, maintien et sortie du cran qu'elle porte.

En outre, si une action accidentelle est exercée sur les moyens de préhension, ceux-ci ne peuvent commander le moyen d'actionnement 34 qu'après une course morte délimitée par le bord transversal de la traverse 26 et la surface inclinée 35 qui se situe à distance dudit bord (figure 5).

La variante de la figure 6 montre une réalisation dans laquelle le connecteur 2 est apte à comporter sur la la branche 4 un second moyen d'accrochage ainsi qu'un second moyen de préhension, pouvant être identique à ceux précédemment décrits mais qui dans le cas de la présente variante sont des moyens connus par l'Art antérieur.

Ces seconds moyens d'accrochage et de préhension sont nécessaires pour disposer d'un connecteur apte à solidariser toute sorte de bras à extrémités recourbées, du type portant un logement soit directement sur le bras, soit sur la partie recourbée 14 précédemment définie.

Grâce au connecteur selon l'invention, le moyen de verrouillage 19 est rendu inopérant dans le cas où il est prévu un second moyen de verrouillage, ici le cran 41 précédemment défini, coopérant avec un logement prévu sur la partie recourbée 14. Dans ce cas, le cran 29 peut facilement s'escamoter en direction de l'ouverture du U que présente le connecteur 1 grâce à la grande élasticité que présente la languette 22 sans pour cela entraîner une déformation de la totalité de la branche qui le porte.

La présente invention n'est pas limitée aux exemples décrits précédemment mais englobe toutes variantes.

Notamment, il peut être prévu que le: moyens d'accrochage prévus sur la languette 22 soient un logement ou un évidement et que le bras 10 porte un cran en lieu et place du logement 43 précédemment mentionné.

Il peut être prévu également que le connecteur soit appliqué à la liaison d'un balai d'essuie-glace avec un bras à extrémité droite, et dans ce cas les moyens d'accrochage 19 et les moyens de préhension 20 seront situés en direction de l'ouverture du U que présente ledit connecteur.

## Revendications

1. Connecteur apte à solidariser un balai d'essuie-glace (5) à un bras d'essuie-glace (10), notamment pour véhicule automobile, présentant un profil en section de forme générale en U à deux branches (3,4) dont l'une au moins est élastiquement déformable, l'une au moins des branches comportant des moyens d'accrochage (19) sur le bras et des moyens de préhension (20) pour le déverrouillage du connecteur par rapport au bras, caractérisé en ce que au moins l'une des branches (3,4) se compose au moins de deux parties élastiquement déformables (21,22,23) et séparées l'une de l'autre, l'une des parties (22) portant les moyens d'accrochage (19) et l'autre des parties (21,23) portant les moyens de préhension (20) et ainsi qu'une traverse (26), de telle sorte qu'au cours du déverrouillage, la traverse (26) entraîne dans son mouvement les moyens d'accrochage (19) en désolidarisant ces derniers (19) du bras d'essuie-glace (10) indépendamment de l'élasticité de la partie nécessaire à l'accrochage du connecteur audit bras (10).

2. Connecteur selon la revendication 1, caractérisé en ce que la branche (3) est formée par trois languettes (21,22,23) espacées l'une de l'autre et parallèles l'une à l'autre.

3. Connecteur selon la revendication 1 ou 2, caractérisé en ce que les languettes (21,23) portant les moyens de préhension (20) sont disposées de part et d'autre de la languette (22) portant les moyens d'accrochage (19).

4. Connecteur selon l'une des revendications 2 et 3, caractérisé en ce que les languettes élastiques (21,23) portant les moyens de préhension (20) sont reliées l'une à l'autre par une traverse (26).

5. Connecteur selon l'une des revendications précédentes, caractérisé en ce que la languette (22) portant les moyens d'accrochage (19) présente un moyen d'actionnement (34).

6. Connecteur selon l'une des revendications précédentes, caractérisé en ce que le moyen d'actionnement (34) est situé, en partie, en dessous de la traverse (26).

7. Connecteur selon l'une des revendications précédentes, caractérisé en ce que le moyen d'actionnement (34) est apte à être actionné par la traverse (26).

8. Connecteur selon l'une des revendications 5 à 7, caractérisé en ce que le moyen d'actionnement se présente sous la forme d'un prolongement en saillie (34) à partir de l'extrémité (30) de la languette (22).

9. Connecteur selon l'une des revendications précédentes, caractérisé en ce que les moyens de préhension (20) consistent en des bossages (28) saillants à partir de la direction transversale de la branche (3).

10. Connecteur selon l'une des revendications précédentes, caractérisé en ce que les moyens d'accrochage consistent en un cran (29) issu de la languette (22).

## Patentansprüche

1. Verbindungsstück zum Verbinden eines Scheibenwischerblattes (5) mit einem Scheibenwischerarm (10), insbesondere für Kraftfahrzeuge, das ein Profil mit einem allgemein U-förmigen Querschnitt mit zwei Schenkeln (3, 4) aufweist, von denen mindestens einer elastisch verformbar ist, wobei mindestens einer der Schenkel Einhakmittel (19) für das Einhaken an dem Wischerarm und Greifmittel (20) fur die Freigabe des Verbindungsstücks im Verhältnis zum Wischerarm aufweist, **dadurch gekennzeichnet,** daß wenigstens einer der Schenkel (3, 4) aus mindestens zwei elastisch verformbaren und voneinander getrennten Teilen (21, 22, 23) besteht, wobei einer dieser Teile (22) die Einhakmittel (19) trägt, während an dem anderen der Teile (21, 23) die Greifmittel (20) angebracht sind, sowie ein Querstück (26), so daß während der Freigabe das Querstück (26) in seiner Bewegung die Einhakmittel (19) mitnimmt, indem es diese (19) von dem Scheibenwischerarm (10) trennt, was unabhängig von der Elastizität des für das Einhaken des Verbindungsstücks an dem Wischerarm erforderlichen Teils erfolgt.

2. Verbindungsstück nach Anspruch 1 , **dadurch gekennzeichnet,** daß der Schenkel (3) durch drei Leisten (21, 22, 23) gebildet wird, die in einem Abstand voneinander und parallel zueinander angeordnet sind.

3. Verbindungsstück nacn Anspruch 1 oder 2 , **dadurch gekennzeichnet,** daß die Leisten (21, 23), an denen sich die Greifmittel (20) befinden, beiderseits der Leiste (22) angeordnet sind, an denen sich die Einhakmittel (19) befinden.

4. Verbindungsstück nach einem der Ansprüche 2 oder 3, **dadurch gekennzeichnet,** daß die elastischen Leisten (21, 23), an denen sich die Greifmittel (20) befinden, durch ein Querstück (26) miteinander verbunden sind.

5. Verbindungsstück nach einem der vorangehenden Ansprüche, **dadurch gekennzeichnet,** daß die Leiste (22), an der sich die Einhakmittel (19) befinden, ein Betätigungsmittel (34) aufweist.

6. Verbindungsstück nach einem der vorangehenden Ansprüche, **dadurch gekennzeichnet,** daß sich das Betätigungsmittel (34) teilweise unterhalb des Querstücks (26) befindet.

7. Verbindungsstück nach einem der vorangehenden Ansprüche, **dadurch gekennzeichnet,** daß das Betätigungsmittel (34) geeignet ist, durch das Querstück (26) betätigt zu werden.

8. Verbindungsstück nach einem der Ansprüche 5 bis 7, **dadurch gekennzeichnet,** daß das Betätigungsmittel in Form einer vorspringenden Verlängerung (34) von dem Ende (30) der Leiste (22) aus ausgeführt ist.

9. Verbindungsstück nach einem der vorangehenden Ansprüche, **dadurch gekennzeichnet,** daß die Greifmittel (20) aus Vorsprüngen (28) bestehen, die von der Querrichtung des Schenkels (3) aus vorstehen.

10. Verbindungsstück nach einem der vorangehenden Ansprüche, **dadurch gekennzeichnet,** daß die Einhakmittel aus einer von der Leiste (22) ausgehenden Rastnase (29) bestehen.

## Claims

1. A connector for joining a windscreen wiper blade (5) to a windscreen wiper arm (10), especially for a motor vehicle, having a profile with a generally U-shaped section with two branches (3, 4), at least one of which is elastically deformable, at least one of the branches comprising hooking means (19) on the arm and gripping means (20) for unlocking the connector in relation to the arm,
**characterised in that** at least one of the branches (3, 4) comprises at least two elastically deformable parts (21, 22, 23) separated from one another, one of the parts (22) bearing hooking means (19) and the other of the parts (21, 23) bearing the gripping means (20) and also a crosspiece (26), so that during the unlocking operation, the movement of the crosspiece (26) entrains the hooking means (19) by detaching the latter (19) from the windscreen wiper arm (10) independently of the elasticity of the part necessary for hooking the connector to the said arm (10).

2. A connector according to Claim 1,
**characterised in that** the branch (3) is formed by three tongues (21, 22, 23) spaced from one another and parallel to one another.

3. A connector according to Claim 1 or 2,
**characterised in that** the tongues (21, 23) bearing the gripping means (20) are disposed on either side of the tongue (22) bearing the hooking means (19).

4. A connector according to one of Claims 2 and 3,
**characterised in that** the elastic tongues (21, 23) bearing the gripping means (20) are connected to one another by a crosspiece (26).

5. A connector according to one of the preceding Claims,
**characterised in that** the tongue (22) bearing the hooking means (19) has an actuating means (34).

6. A connector according to one of the preceding Claims,
**characterised in that** the actuating means (34) is partially situated beneath the crosspiece (26).

7. A connector according to one of the preceding Claims,
**characterised in that** the actuating means (34) is able to be actuated by the crosspiece (26).

8. A connector according to one of Claims 5 to 7,
**characterised in that** the actuating means is in the form of an extension (34) protruding from the end (30) of the tongue (22).

9. A connector according to one of the preceding Claims,
**characterised in that** the gripping means (20) consist of bosses (28) protruding from the transversal direction of the branch (3).

10. A connector according to one of the preceding Claims,
**characterised in that** the hooking means consist of a catch (29) protruding from the tongue (22).
